# FASCICULE DE BREVET EUROPEEN

(11) **EP 2 795 121 B1**
(45) Date de publication et mention de la délivrance du brevet: **18.10.2017**
(21) Numéro de dépôt: 12816740.0
(22) Date de dépôt: 19.12.2012
(51) Int. Cl.: C09D 5/24, F03D 1/00, H05B 3/20, C09D 179/02, H05B 3/14, F03D 80/40

(54) **PROCEDE DE DÉGIVRAGE DE STRUCTURES EN MATÉRIAUX COMPOSITES, NOTAMMENT DE PALES D'UNE ÉOLIENNE, ET DISPOSITIF ADAPTÉ**
VERFAHREN ZUM ENTEISEN VON VERBUNDSTOFFMATERIALSTRUKTUREN, INSBESONDERE FÜR FLÜGEL EINER WINDTURBINE, UND DAFÜR GEEIGNETE VORRICHTUNG
METHOD FOR DE-ICING COMPOSITE MATERIAL STRUCTURES, PARTICULARLY BLADES OF A WIND TURBINE, AND SUITABLE DEVICE

(30) Priorité: 19.12.2011 FR 1161867
(43) Date de publication de la demande: 29.10.2014
(73) Titulaire: Valeol, 33130 Begles (FR)
(72) Inventeur: GAILLARDON, Bastien, F-33000 Bordeaux (FR); GRACIA, Serge, F-31500 Tuleda Navarra (ES); OYHARCABAL, Mathieu, F-33400 Talence (FR); OLINGA, Thomas, F-33270 Floirac (FR)
(74) Mandataire: Aquinov
(86) Numéro de dépôt international: PCT/FR2012/053005
(87) Numéro de publication internationale: WO 2013/093349

(56) Documents cités:
- WO-A1-2008/048176
- WO-A1-2011/096851
- WO-A2-2010/028653
- FR-A1- 2 880 350
- GB-A- 2 252 285
- GB-A- 2 445 458
- US-B1- 6 552 107

## Description

La présente invention concerne un procédé de dégivrage de structures en matériaux composites, notamment un procédé de dégivrage de pales d'une éolienne. L'invention vise aussi la composition polymère adaptée.

L'invention couvre également le dispositif associé pour l'alimentation et le pilotage.

La présente invention est décrite en regard du givrage des pales d'éolienne car il s'agit d'un problème très important mais le procédé pourrait être adapté à d'autres structures en matériaux composites.

Les éoliennes sont une source d'énergie renouvelable qui a séduit notre civilisation car susceptible de compenser en partie les énergies d'origine carbone ou d'origine nucléaire pour produire de l'électricité. Même si les quantités produites restent faibles, elles ne coûtent rien durant la production si ce n'est l'amortissement initial et la maintenance, n'ayant aucun impact carbone et pouvant travailler pendant 20 à 30 ans, avec un contrôle quasi automatique.

Ces éoliennes travaillent dans des plages de vitesses de vent données, en fonction de leur résistance mécanique et de nombreux autres paramètres liés à la classe de vent associée au site selon des normes comme celle de l'IEC (International Electrique Commission).

Quand les éoliennes ne travaillent pas les pales sont mises en drapeau c'est-à-dire sans prise au vent, par vent trop fort et en position d'attente par vent insuffisant et les pales restent donc quasiment immobiles ou en rotation libre.

Les profils des pales d'éoliennes sont de type alaire, comme une aile d'avion avec un intrados, un extrados, un bord d'attaque et un bord de fuite, générant des surpressions ou des dépressions d'air. Or les pales tournent à grande vitesse de rotation, entre 10 et 20 tours/minute surtout quand elles sont à leur rendement maximum autorisé et les vitesses atteintes en bout de pales sont très élevées, entre 70 et 80 m/s avec donc des phénomènes de dépression ou turbulence importants.

Or il se trouve que, dans certaines conditions atmosphériques, les pales se recouvrent d'une couche de givre pour le moins voire d'une couche de glace, soit durant le fonctionnement soit lorsqu'elles sont à l'arrêt, comme toute structure en plein air et a fortiori lorsqu'il y a une forte exposition aux intempéries.

Les éoliennes sont de façon judicieuse implantées en des lieux ventés que sont les sommets de collines ou de monts battus par les vents ou en mer et, en offshore particulièrement, les conditions peuvent être extrêmes.

Si les pales se recouvrent de givre, cela pose de nombreux et graves problèmes de surcharges, de balourd, de vibrations, de décrochement de plaques de glace ou de givre.

Si les pales sont recouvertes d'une couche de givre ou de glace, même mince, il est très intéressant de pouvoir dégivrer les pales pour assurer le fonctionnement continu et sûr de l'éolienne. En effet, il peut ne pas y avoir de vent avec des conditions de givre qui conduisent à la formation d'une épaisse couche de givre, si le lendemain les conditions de vent sont adaptées sans conditions de givrage, malgré un froid tel que la couche épaisse de givre est toujours en place, il serait utile de dégivrer pour mettre l'éolienne en condition de production.

Ainsi, certains parcs déjà installés et certains parcs en cours d'installation ou en projet pourraient trouver là une récupération de la durée de production annuelle théorique de plusieurs pourcents, ce qui est loin d'être négligeable.

De plus, on sait aussi que la couche parasite pose des problèmes de sécurité car elle peut engendrer la rupture des pales ou du rotor. Il est par ailleurs difficile d'imaginer augmenter très fortement la résistance mécanique des pales pour répondre à ce problème, ce qui pénaliserait le fonctionnement durant le reste du temps, c'est-à-dire la majeure partie. Ce renforcement mécanique aura aussi une incidence sur le prix de fabrication car c'est bien sûr l'ensemble de la structure qui est à renforcer.

Autre problème de sécurité, celui des plaques de glace qui peuvent se former sur la surface des pales et qui se désolidarisent de la surface pour devenir de vrais dangers pour les personnes amenées à intervenir à proximité.

Le givre ou la glace engendre aussi, même en couche mince, un surpoids qui pénalise la production et qui provoque aussi des déséquilibres entre les pales, induisant des vibrations néfastes à la durée de vie des paliers du rotor et des différentes pièces de l'éolienne.

Les éoliennes sont surveillées et des capteurs sont installés dans les pales et la base du rotor ainsi qu'une motorisation pour assurer l'orientation des pales, ensemble mécanique dit aussi "pitch". On note donc qu'il existe déjà une source d'alimentation électrique proche des pales. En effet, soit il s'agit de courant triphasé pour une motorisation électrique, soit de courant 24 volts pour les témoins de fin de course etc., pour une motorisation hydraulique.

Les pales d'éolienne sont réalisées en matériaux composites à base de matrices polyester ou époxyde, de renforts en fibres de verre, en fibres de carbone et d'une âme en matériau léger du type balsa ou mousse.

Les pales de grandes dimensions sont creuses, souvent réalisées en deux demi-coques assemblées au plan médian des bords d'attaque et des bords de fuite. On connaît des solutions de l'art antérieur visant à dégivrer des pales d'éoliennes mais qui ne donnent pas satisfaction pour de nombreuses raisons.

On peut citer par exemple la demande de brevet WO 2011018695 qui décrit des segments de films thermoélectriques à base de carbone imprégné de polyimide. Ces films sont rapportés sur la surface des pales, ce qui n'est pas satisfaisant au regard des conditions climatiques d'exploitation et de la dégradation rapide de cette surface par les agressions extérieures de la pluie, de la grêle, du grésil. De même la demande de brevet WO 201028653 divulgue une réalisation d'une couche de matériau incluant des nanoparticules conductrices mais ceci requiert la production de nanoparticules. L'adjonction de composants métalliques ajoute à la signature équivalent radar, toujours susceptible de perturber les organismes militaires et météo.

La demande de brevet WO 200079128 décrit un chauffage avec parafoudre comprenant des feuilles métalliques qui forment résistance. Il s'agit là d'un chauffage à résistance avec les inconvénients liés au fait de disposer de pièces métalliques dans les pales et de générer des sources ponctuelles de chaleur au lieu d'une répartition adaptée.

Les exploitants de parcs éoliens sont à la recherche d'une solution qui soit peu coûteuse, sans entretien, légère pour une intégration parfaite du rotor, un équilibrage des pales avec une différence de poids d'un même jeu inférieur à 5%, sans risque pour les personnels, qui ne modifie pas le profil des pales, qui ne complexifie pas la production des pales, qui soit discrète esthétiquement, qui évite une modification de l'éolienne elle-même et qui puisse être adaptée sur les pales à construire mais aussi en rétrofit sur des pales installées, le nombre de parcs touchés par le givre étant déjà très important sur tous les continents.

La présente invention vise à apporter une solution qui pallie les problèmes évoqués. Cette solution va maintenant être décrite en regard des figures annexées qui représentent :
- Figure 1 : une vue d'une éolienne,
- Figure 2 : une vue schématique d'une pale d'éolienne et de son moyeu équipée du dispositif de dégivrage selon la présente invention.
- Figure 3 : une vue schématique en perspective d'une pale d'éolienne, équipée du dispositif de dégivrage selon la présente invention.

La présente invention, définie par les revendications indépendantes, est maintenant décrite en regard des figures indifféremment.

Les éoliennes comprennent un mât 10, un rotor 12 constitué de pales 14 solidaires d'une pièce 16 porteuse dite "hub", qui est un moyeu monté sur palier 18 et des moyens 20 de production de courant, particulièrement une génératrice 22 de courant.

Soit la génératrice est entraînée directement par le rotor 12, soit par l'intermédiaire d'une multiplicatrice. Pour la présente invention, peu importe l'agencement de production électrique, sachant que le dispositif de dégivrage de pales d'éolienne selon l'invention trouve application dans tous les modes de réalisation.

Les moyens de production électrique sont généralement logés dans un carter nommé nacelle 24 afin de mettre à l'abri l'ensemble de ces composants électriques.

L'électricité est ensuite conduite au réseau.

On comprend donc que l'énergie électrique est à disposition non loin du hub et des pales.

De plus, pour les besoins de la commande de l'éolienne, notamment l'éclairage intérieur ou extérieur, les capteurs ou tout simplement l'excitation de la génératrice, il existe différents circuits électriques internes, à proximité des pales.

Afin de permettre la commande d'orientation des pales par rapport au hub qui les porte, il est prévu des moteurs M d'orientation des pales. Lorsque la motorisation M est électrique, il est prévu des connexions électriques pour alimenter ces moteurs et/ou les commander. De ce fait, il est prévu des agencements bien connus de l'art antérieur avec un collecteur tournant dit aussi "slip ring" interposé entre la partie fixe du moyeu et le hub tournant. En fonction du type de puissance, du type de courant le collecteur tournant est adapté. On peut même monter plusieurs collecteurs tournants concentriques en fonction des courants et des destinations.

La fabrication des pales d'éolienne en matériaux composites consiste à réaliser des profils par moulage de façon connue avec des raidisseurs de façon à obtenir le meilleur compromis entre poids, rigidité, résistance mécanique.

En partie extérieure, chaque pale reçoit une couche de matériau de finition, généralement un gel-coat qui est un matériau très résistant à l'usure, qui présente un état de surface naturellement poli dès la polymérisation, de façon à limiter la production de turbulences, de micro turbulences sur la surface, somme de turbulences qui augmentent la traînée et diminuent le rendement.

Ces fabrications sont bien connues en aéronautique pour les avions à cellules en matériaux composites.

Le gel-coat a aussi un rôle de barrière aux UV, à l'humidité, et son coefficient de mouillabilité est très faible, ce qui évite de retenir les gouttes d'eau ou un film d'eau.

On connaît par ailleurs la demande de brevet français FR 2 880 350 avec pour titulaire, la société RESCOLL concernant un procédé de fabrication d'une polyaniline ou des formes substituées de la polyaniline au niveau des noyaux aromatiques ou des atomes d'azote en tant que matériau conducteur de l'électricité. Ces polyanilines sont dénommées famille des polyanilines dopées pour la suite de la description.

Le procédé consiste à polymériser l'aniline en présence d'au moins un dopant (A) et éventuellement d'autres additifs tels que des plastifiants, des surfactants, des liants ou encore des colorants.

La réaction mise en oeuvre est la suivante :

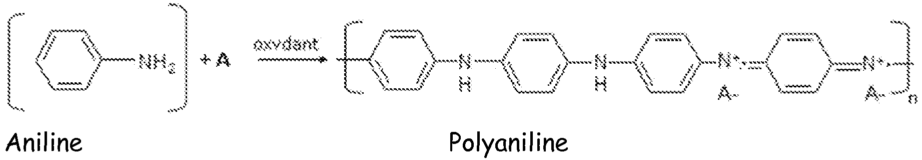

La polyaniline dopée obtenue est ensuite purifiée en milieu alcoolique puis dissoute à nouveau dans de l'eau déminéralisée.

Les dopants A utilisés pour le procédé de fabrication de la polyaniline selon un exemple de la présente invention comprennent un tenseur (R) hydrophile, souple, ajustable et tensioactif.

Ces dopants A répondent à la formule générale suivante : 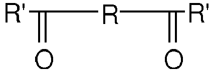 dans laquelle :
- R est un radical hydrosoluble, avec un caractère surfactant, et qui représente soit :
   - une diamine primaire ou secondaire de formule 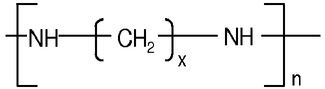 x et n étant des nombres entiers, x variant entre 1 et 5 et n variant entre 1 et 20
   - un polyéthylène glycol de formule 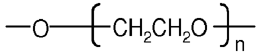 n étant un nombre entier compris entre 1 et 20, et préférentiellement entre 1 et 14.
   - un polyéthylène oxyde de formule 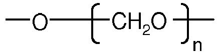 n étant un nombre entier compris entre 1 et 20, et préférentiellement entre 1 et 14.
   - Un glycérol de formule 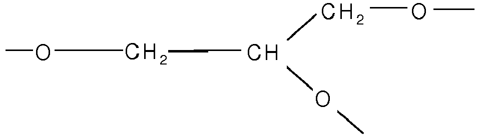
- R' représente soit :
   - un alcane, associé à un groupement acide, de formule

      CH₂ - R0

      dans laquelle R0 représente SO₃H, PO₃H₂ ou COOH,
   - au moins un cycle aromatique, contenant un plusieurs groupements acides, de formule 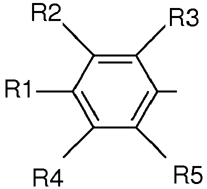 dans laquelle :
      - R1 représente SO₃H, PO₃H₂ ou COOH,
      - R2 représente H, OH, CH₃(CH₂)ₓ (x=0,1,2,3...), NO₂, SO₃H, Cl ou Br,
      - R3 représente H, OH, SO₃H, Cl ou Br,
      - R4 représente H, OH, SO₃H, Cl ou Br, et
      - R5 représente H, OH ou SO₃H 6.

Le rendement de la réaction de polymérisation de la polyaniline suivant le procédé de fabrication selon l'invention est supérieur à 80%.

On obtient ainsi une polyaniline dopée, qui peut être associée à d'autres polymères notamment pour la réalisation de formulations pour revêtements du type peintures conductrices de l'électricité.

Ces formulations conductrices de polymère organique, grâce aux molécules du dopant, permettent d'obtenir souplesse et conductivité électrique et donc permettent de viser des applications résistives par effet Joule.

Il convient de prévoir aussi des électrodes d'alimentation en énergie électrique. De telles électrodes peuvent subir des actions de corrosion de la part de la polyaniline. Une protection à l'argent peut s'avérer nécessaire.

Les épaisseurs de polymère conducteur envisageable sont comprises entre 10 et 500 *µ*m, de préférence entre 50 et 200 *µ*m. Avec de telles épaisseurs, on obtient une résistivité de surface du revêtement comprise entre 20 et 200 Ohm/unité de surface permettant de générer des puissances de 300 à 500 W/m² sous courant faible de 48 V et une distance entre les électrodes de l'ordre de 30 cm. La température atteinte est de l'ordre de 50°C.

Le procédé de dégivrage de structures en matériaux composites selon l'invention, notamment le procédé de dégivrage de pales d'une éolienne selon la présente invention consiste à :
- disposer au moins une couche conductrice d'une formulation à base de polymère conducteur sur au moins une partie de la surface de chaque pale,
- prévoir une alimentation électrique appropriée dans chaque pale, et
- relier la couche d'une formulation de polymère conducteur à l'alimentation électrique de façon à pouvoir provoquer un échauffement de ladite couche conductrice de polyaniline dopée,
- piloter l'alimentation électrique en fonction des conditions climatiques.

Le polymère conducteur peut être de façon avantageuse une formulation à base de la polyaniline dopée, conductrice de l'électricité telle qu'elle a été décrite ci-avant.

Dans le cadre de la fabrication de pales neuves, la couche de polyaniline peut être déposée au rouleau sur le composite structurel directement et recouverte soit :
- d'une couche de matériaux composites de finition, lui-même apte à recevoir une couche de finition (gel coat, peinture, ruban adhésif)
- d'une couche de finition directement rapportée (gel coat, peinture, ruban adhésif).

Une couche intermédiaire peut aussi prévue à base de vernis ou de résine polyuréthane

Dans le cadre du rétrofit d'une éolienne, il est nécessaire de retirer les couches de finition de chaque pale (gel coat, peinture, ruban adhésif), puis d'appliquer la couche de la formulation à base de polyaniline dopée, au rouleau, sur une certaine épaisseur directement sur la surface du composite structurel. Après séchage, cette couche de polyaniline est protégée par une couche de finition (gel coat, peinture, ruban adhésif, vernis, revêtement polymère à base de résine polyuréthane).

Ceci est un mode de réalisation particulier, non limitatif.

La couche de formulation à base de polyaniline dopée doit être déposée en couche d'une épaisseur avec une très grande régularité afin de ne pas créer de point chaud.

Une solution consiste à préparer des matériaux à appliquer dont l'épaisseur et la quantité de formulation à base de polyaniline dopée sont parfaitement contrôlées.

Ainsi, la formulation à base de polyaniline dopée peut faire l'objet d'une imprégnation des fibres constituant l'armature d'une des couches de matériaux composites.

Les zones retenues sur une pale d'éolienne sont, de façon privilégiée, le bord d'attaque BA et le bord de fuite BF.

Lorsque le bord d'attaque est privilégié, ce qui est généralement la zone critique, le revêtement couvre le bord d'attaque BA et se prolonge donc sur une partie de la surface de l'extrados et de l'intrados. Les électrodes sont alors disposées parallèlement au bord d'attaque BA. L'une des électrodes est alors disposée sur l'extrados E et l'autre électrode est disposée sur l'intrados I.

Selon la présente invention, il est possible de prévoir une application de la formulation à base de polyaniline dopée sur toute la surface y compris extrados E et intrados I, afin de répondre à toutes les situations de givrage.

En effet, les bords d'attaque et bords de fuite sont privilégiés lorsque les pales tournent mais il faut aussi prévoir le cas où les pales sont à l'arrêt, toute la surface est alors concernée et il faut dégivrer avant toute remise en service.

La formulation à base de polyaniline dopée pourrait être déposée en surface et le produit obtenu donnerait satisfaction mais pour des raisons de longévité, de durabilité, de fiabilité, il est préférable de prévoir une couche de protection, type gel-coat au moins. La couche de gel-coat assure la protection vis-à-vis des UV, des agressions mécaniques liées à l'érosion, à la grêle notamment. Une couche de vernis ou de polyuréthane peut aussi assurer une protection supplémentaire.

De la même façon, il est possible de positionner plusieurs couches de formulation à base de polyaniline dopée à différents niveaux de superposition, à différentes profondeurs dans l'épaisseur de la pale, de façon à gérer les givrages légers, les givrages sévères.

Dans le cas de la fabrication des pales, on peut aussi prévoir d'imprégner un tissu comme indiqué ci-avant mais entrant directement dans la fabrication de la pale avec au moins une formulation à base de polyaniline dopée et d'inclure ce tissu imprégné dans la succession de couches de fabrication du composite.

La gestion du chauffage est adaptée à la situation. Si les conditions de givrage sont trop importantes, l'éolienne sera mise à l'arrêt car la consommation électrique liée risque d'être supérieure à la production, ce qui est la limite à ne pas dépasser.

Cette gestion est avantageusement confiée à un automate qui, en fonction des conditions de température, de vent, d'humidité, de dépôt de givre pilote le dispositif de dégivrage selon la présente invention, les différentes zones surfaciques et les différentes zones en profondeur.

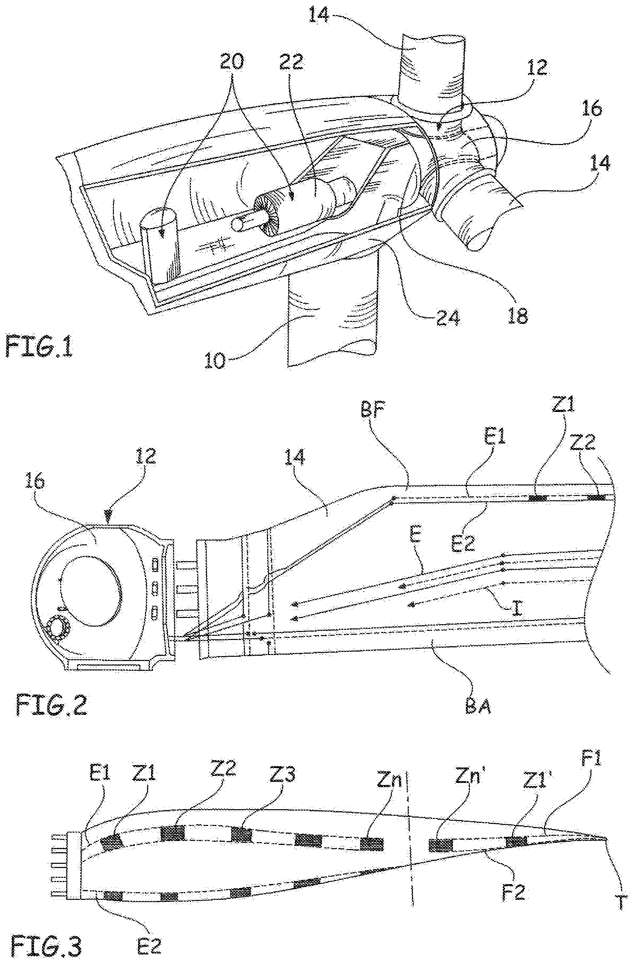

Pour des agencements concernant des pales d'éolienne de grandes dimensions, il se pose un problème d'alimentation en énergie électrique. Une solution, représentée schématiquement sur la figure 3, consiste à réaliser des zones de chauffage, Z1, Z2...Zn, qui sont alimentées par un montage en parallèle à partir de deux électrodes E1 et E2. Néanmoins, les zones distales du moyeu sont difficiles à alimenter du fait de la puissance nécessaire à faire passer par lesdites électrodes.

Une solution, toujours visible sur la figure 3 consiste à faire passer une alimentation par l'intérieur de la pale et à faire sortir les câbles F1, F2 de ladite alimentation par un trou T d'extrémité des pales, pour alimenter les zones Z'1..Z'n.

En effet, chaque pale est dotée d'un trou T d'évacuation des eaux de condensation si bien que les contraintes mécaniques engendrées par la présence de ce trou ont déjà été prises en compte.

L'alimentation par l'extrémité est donc possible sans modification de la conception de la pale y compris en rétrofit.

Un autre problème est aussi la présence nécessaire de sondes de mesure de la température à l'aide de thermocouples. A cet effet et pour diminuer le nombre de fils transitant dans la pale, il est possible de recourir à des thermocouples sans fil.

## Revendications

1. Procédé de dégivrage de structures en matériaux composites, notamment de pales d'une éolienne en matériaux composites, comprenant les étapes suivantes :
- disposer au moins une couche conductrice d'une formulation à base de polymère conducteur sur au moins une partie de la surface de la structure,
- prévoir une alimentation électrique appropriée de la structure, et
- relier la couche d'une formulation à base de polymère conducteur à l'alimentation électrique de façon à pouvoir provoquer un échauffement de ladite couche conductrice de polymère conducteur,
- piloter l'alimentation électrique en fonction des conditions climatiques, où le polymère conducteur est un polymère conducteur à base de polyaniline dopée.

2. Procédé de dégivrage de structures en matériaux composites, notamment de pales d'une éolienne, selon la revendication 1, **caractérisé en ce que** la au moins une couche conductrice d'une formulation à base de polyaniline est intégrée dans les matériaux composites constituant ladite structure.

3. Procédé de dégivrage de structures en matériaux composites, notamment de pales d'une éolienne, selon la revendication 1 ou 2, **caractérisé en ce que** la au moins une couche conductrice d'une formulation à base d'un polymère conducteur est disposée sous un gelcoat de finition.

4. Procédé de dégivrage de structures en matériaux composites, notamment de pales d'une éolienne, selon la revendication 1, 2 ou 3, **caractérisé en ce qu'**il consiste à disposer plusieurs couches conductrices d'une formulation à base d'un polymère conducteur à base de polyaniline à différentes profondeurs dans les matériaux composites.

5. Procédé de dégivrage de structures en matériaux composites, notamment de pales d'une éolienne, selon l'une quelconque des revendications précédentes, caractérisé en ce le polymère conducteur à base de polyaniline dopée est obtenu selon la réaction suivante : 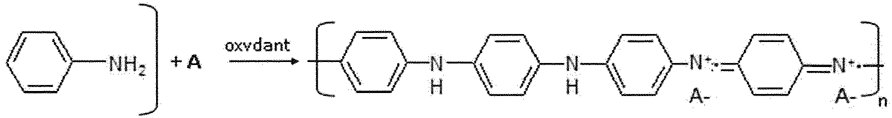 avec A choisi parmi des dopants de formule générale : 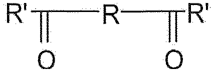 dans laquelle :
- R est un radical hydrosoluble, avec un caractère surfactant, et qui représente soit :
• une diamine primaire ou secondaire de formule 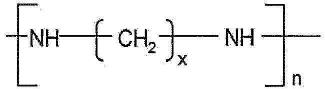 x et n étant des nombres entiers, x variant entre 1 et 5 et n variant entre 1 et 20
• un polyéthylène glycol de formule 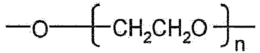 n étant un nombre entier compris entre 1 et 20, et préférentiellement entre 1 et 14.
• un polyéthylène oxyde de formule 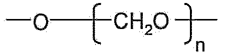 n étant un nombre entier compris entre 1 et 20, et préférentiellement entre 1 et 14.
• Un glycérol de formule 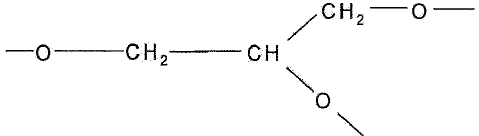
- R' représente soit :
• un alcane, associé à un groupement acide, de formule
CH₂ - R0
dans laquelle R0 représente SO₃H, PO₃H₂ ou COOH,
• au moins un cycle aromatique, contenant un plusieurs groupements acides, de formule 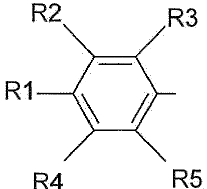 dans
laquelle :
- R1 représente SO₃H, PO₃H₂ ou COOH,
- R2 représente H, OH, CH₃(CH₂)ₓ (x=0,1,2,3...), NO₂, SO₃H, Cl ou Br,
- R3 représente H, OH, SO₃H, Cl ou Br,
- R4 représente H, OH, SO₃H, Cl ou Br, et
- R5 représente H, OH ou SO₃H 6.

6. Dispositif de dégivrage des pales d'une éolienne en matériaux composites, pour la mise en oeuvre du procédé selon l'une quelconque des revendications précédentes, **caractérisé en ce qu'**il comprend une alimentation électrique avec un collecteur tournant disposé dans le moyeu de ladite éolienne et venant au droit du hub recevant lesdites pales, la liaison étant réalisée par l'extérieur.

7. Dispositif de dégivrage des pales d'une éolienne en matériaux composites, selon la revendication 6, **caractérisé en ce qu'**il comprend au moins deux électrodes (E1, E2) et au moins une zone (Z1...Zn) avec une couche conductrice d'une formulation à base de polymère conducteur.

8. Dispositif de dégivrage des pales d'une éolienne en matériaux composites, selon la revendication 7, **caractérisé en ce que** les zones (Z1...Zn) sont montées en parallèle.

9. Dispositif de dégivrage des pales d'une éolienne en matériaux composites, selon la revendication 6, 7 ou 8, **caractérisé en ce que** les électrodes (F1, F2) sont liées à une alimentation passant par un trou T ménagé à l'extrémité de chaque pale.

## Patentansprüche

1. Verfahren zum Enteisen von Strukturen aus Verbundmaterial, insbesondere von Flügeln einer Windturbine aus Verbundmaterial, mit den folgenden Schritten:
- Aufbringen von wenigstens einer leitenden Schicht einer Formulierung auf Grundlage eines leitenden Polymers auf wenigstens einem Teil der Oberfläche der Struktur,
- Vorsehen einer geeigneten elektrischen Versorgung der Struktur, und
- Verbinden der Schicht einer Formulierung auf der Grundlage eines leitenden Polymers mit der elektrischen Versorgung, um auf diese Weise eine Erwärmung der leitenden Schicht aus leitendem Polymer herbeiführen zu können,
- Steuern der elektrischen Versorgung in Abhängigkeit von den klimatischen Bedingungen, wobei das leitende Polymer ein leitendes Polymer auf der Grundlage von dotiertem Polyanilin ist.

2. Verfahren zum Enteisen von Strukturen aus Verbundmaterial, insbesondere von Flügeln einer Windturbine, nach Anspruch 1, **dadurch gekennzeichnet, dass** die wenigstens eine leitende Schicht einer Formulierung auf der Grundlage von Polyanilin in die Verbundmaterialien integriert ist, die die Struktur bilden.

3. Verfahren zum Enteisen von Strukturen aus Verbundmaterial, insbesondere von Flügeln einer Windturbine, nach Anspruch 1 oder 2, **dadurch gekennzeichnet, dass** die wenigstens eine leitende Schicht einer Formulierung auf der Grundlage eines leitenden Polymers unter einer abschließenden Schutzschicht angeordnet ist.

4. Verfahren zum Enteisen von Strukturen aus Verbundmaterial, insbesondere von Flügeln einer Windturbine, nach Anspruch 1, 2 oder 3, **dadurch gekennzeichnet, dass** dieses darin besteht, mehrere leitende Schichten einer Formulierung auf der Grundlage eines leitenden Polymers auf der Grundlage von Polyanilin in verschiedenen Tiefen der Verbundmaterialien anzuordnen.

5. Verfahren zum Enteisen von Strukturen aus Verbundmaterial, insbesondere von Flügeln einer Windturbine, nach einem der vorhergehenden Ansprüche, **dadurch gekennzeichnet, dass** das leitende Polymer auf der Grundlage von dotiertem Polyanilin durch die folgende Reaktion hergestellt wird: 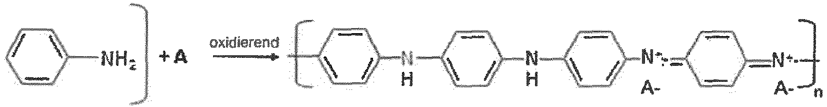 wobei A aus den Dotierungsstoffen gemäß der allgemeinen Formel ausgewählt wird: 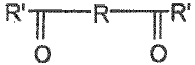 in der:
- R ein wasserlösliches Radikal mit oberflächenaktiven Eigenschaften ist und wahlweise für Folgendes steht:
• ein primäres oder sekundäres Diamin der Formel 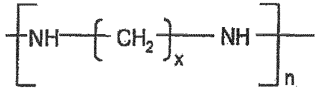 wobei x und n ganze Zahlen sind und x zwischen 1 und 5 und n zwischen 1 und 20 variiert
• ein Polyethylenglykol der Formel 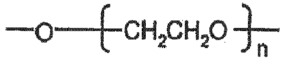 wobei n eine ganze Zahl zwischen 1 und 20 und vorzugsweise zwischen 1 und 14 ist.
• ein Polyethylenoxid der Formel 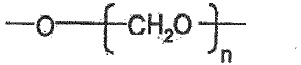 wobei n eine ganze Zahl zwischen 1 und 20 und vorzugsweise zwischen 1 und 14 ist.
• ein Glycerol der Formel 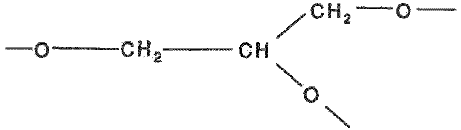
- R' steht wahlweise für Folgendes:
• ein Alkan mit einer Säuregruppe der Formel
CH₂ - R0
in der R0 für SO₃H, PO₃H₂ oder COOH steht,
• wenigstens ein mehrere Säuregruppen enthaltenden aromatischen Ring der Formel 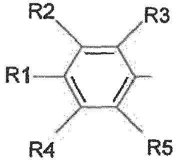 in der:
- R1 für SO₃H, PO₃H₂ oder COOH,
- R2 für H, OH, CH₃(CH₂)ₓ (x=0,1,2,3...), NO₂, SO₃H, Cl oder Br steht,
- R3 für H, OH, SO₃H, Cl oder Br steht,
- R4 für H, OH, SO₃H, Cl oder Br steht, und
- R5 für H, OH oder SO₃H 6 steht.

6. Vorrichtung zum Enteisen von Flügeln einer Windturbine aus Verbundmaterial für die Anwendung des Verfahrens nach einem der vorhergehenden Ansprüche, **dadurch gekennzeichnet, dass** diese eine elektrische Versorgung mit einem Schleifring aufweist, der in der Nabe des Windrads angeordnet ist und dem Drehkreuz der Flügel gegenüber liegt, wobei eine Verbindung nach außen eingerichtet ist.

7. Vorrichtung zum Enteisen von Flügeln einer Windturbine aus Verbundmaterial nach Anspruch 6, **dadurch gekennzeichnet, dass** diese wenigstes zwei Elektroden (E1, E2) und wenigstens eine Zone (Z1...Zn) mit einer leitenden Schicht einer Formulierung auf der Grundlage eines leitenden Polymers aufweist.

8. Vorrichtung zum Enteisen von Flügeln einer Windturbine aus Verbundmaterial nach Anspruch 7, **dadurch gekennzeichnet, dass** die Zonen (Z1...Zn) parallel angebracht sind.

9. Vorrichtung zum Enteisen von Flügeln einer Windturbine aus Verbundmaterial nach Anspruch 6, 7 oder 8, **dadurch gekennzeichnet, dass** die Elektroden (F1, F2) mit einer Versorgung verbunden sind, die durch ein Loch T hindurchtritt, das am Ende jedes Flügels ausgebildet ist.

## Claims

1. A method for de-icing structures made from composite materials, in particular blades of a wind turbine made from composite materials, comprising the following steps:
- disposing at least one conductive layer with a formulation based on conductive polymer on at least part of the surface of the structure,
- providing a suitable electrical power supply to the structure, and
- connecting the layer with a formulation based on conductive polymer to the electrical power supply so as to be able to cause a heating of said conductive layer of conductive polymer,
- controlling the electrical power supply according to the climatic conditions,
wherein the conductive polymer is a conductive polymer based on doped polyaniline.

2. A method for de-icing structures made from composite materials, in particular blades of a wind turbine, according to claim 1, **characterised in that** the at least one conductive layer with a formulation based on polyaniline is integrated in the composite materials constituting said structure.

3. A method for de-icing structures made from composite materials, in particular blades of a wind turbine, according to claim 1 or 2, **characterised in that** the at least one conductive layer with a formulation based on a conductive polymer is disposed under a finishing gelcoat.

4. A method for de-icing structures made from composite materials, in particular blades of a wind turbine, according to claim 1, 2 or 3, **characterised in that** it consists of depositing a plurality of conductive layers with a formulation based on a conductive polymer based on polyaniline at different depths in the composite materials.

5. A method for de-icing structures made from composite materials, in particular blades of a wind turbine, according to any of the preceding claims, **characterised in that** the conductive polymer based on doped polyaniline is obtained according to the following reaction: 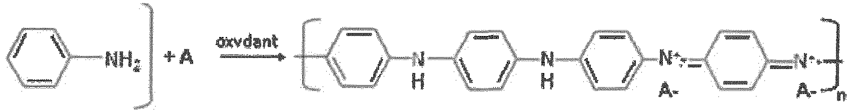 with A chosen from dopants of general formula: 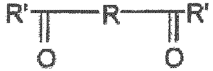 in which:
- R is a water-soluble radical, with a surfactant character, and which represents either:
• a primary or secondary diamine of formula 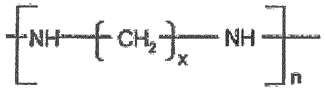 x and n being integers, x varying between 1 and 5 and n varying between 1 and 20
• a polyethylene glycol of formula 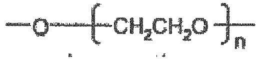 n being an integer between 1 and 20, and preferentially between 1 and 14.
• a polyethylene oxide of formula 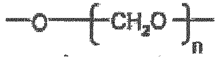 n being an integer between 1 and 20, and preferentially between 1 and 14.
• a glycerol of formula 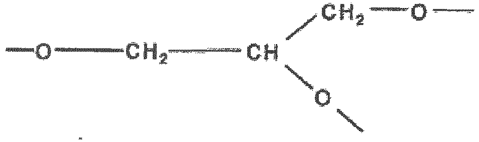
- R*'* represents either:
• an alkane, associated with an acid group, of formula
CH₂ - R0
in which R0 represents SO₃H, PO₃H₂ or COOH,
• at least one aromatic ring, containing one or more acid groups, of formula 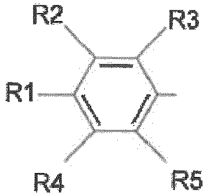 in which:
- R1 represents SO₃H, PO₃H₂ or COOH,
- R2 represents H, OH, CH₃(CH₂)ₓ (ₓ=0, 1, 2, 3...), NO₂, SO₃H, Cl or Br,
- R3 represents H, OH, SO₃H, Cl or Br,
- R4 represents H, OH, SO₃H, Cl or Br, and
- R5 represents H, OH or SO₃H₆.

6. A device for de-icing blades of a wind turbine made from composite materials, for implementing the method according to any of the preceding claims, **characterised in that** it comprises an electrical power supply with a rotary collector disposed in the hub of said wind turbine and coming in line with the hub receiving said blades, the connection being made from outside,.

7. A device for de-icing blades of a wind turbine made from composite materials, according to claim 6, **characterised in that** it comprises at least two electrodes (E1, E2) and at least one zone (Z1...Zn) with a conductive layer with a formulation based on conductive polymer.

8. A device for de-icing blades of a wind turbine made from composite materials according to claim 7, **characterised in that** the zones (Z1...Zn) are mounted in parallel.

9. A device for de-icing blades of a wind turbine made from composite materials, according to claims 6, 7 or 8, **characterised in that** the electrodes F1, F2) are connected to a power supply passing through a hole T provided at the end of each blade.
